# EUROPÄISCHE PATENTANMELDUNG

(11) **EP 0 778 679 A2**
(43) Veröffentlichungstag der Anmeldung: **11.06.1997**
(21) Anmeldenummer: 96115196.6
(22) Anmeldetag: 21.09.1996
(51) Int. Cl.: H04B 7/26

(54) **Funknetz**

(30) Priorität: 14.11.1995 DE 19542390
(71) Anmelder: R & S BICK Mobilfunk GmbH, 31848 Bad Münder (DE)
(72) Erfinder: Rieder, Thomas, Dipl.-Ing., 84570 Polling (DE)
(74) Vertreter: Graf, Walter, Dipl.-Ing.

(57) **Zusammenfassung**

Bei einem Funknetz mit mehreren einen räumlich begrenzten Versorgungsbereich abdeckenden Basisstationen, über welche innerhalb des Versorgungsbereiches mobile und/oder stationäre Endgeräte, die durch von den Basisstationen ausgesendete Synchronisationsinformationen synchronisiert sind, zur Informationsübertragung verbindbar sind, ist
mindestens ein Endgerät mit einer Zusatzeinrichtung zum Aussenden von Synchronisationsinformationen versehen, die von den von mindestens einer der Basisstationen (B1 bis Bn) des Netzes ausgesendeten Synchronisationsinformationen abgeleitet werden;
außerdem ist mindestens ein Endgerät vorgesehen, das seinerseits eine Zusatzeinrichtung zum Empfangen und Auswerten dieser durch ein Endgerät des Netzes ausgesendeten Synchronisationsinformationen aufweist; damit ist auch ein Verbindungsaufbau zu einem außerhalb des Versorgungsbereiches des Netzes betriebenen Endgerät möglich.

## Beschreibung

Die Erfindung betrifft ein Funknetz laut Oberbegriff des Hauptanspruches.

Nach dem sogenannten Vielfach-Zugriffsverfahren arbeitende Funknetze dieser Art sind bekannt (siehe beispielsweise das bekannte Mobilfunksystem nach GSM-Standard). Bei solchen Funknetzen müssen die im Versorgungsbereich benutzten Endgeräte zum Informationsaustausch entweder untereinander oder zumindest zur Infrastruktur des Netzes synchronisiert sein. Zu diesem Zweck werden über die Basisstationen zusätzliche Synchronisationsinformationen ausgesendet, die in den einzelnen Endgeräten ausgewertet werden. Andere Endgeräte, die nicht entsprechend synchronisiert sind, können mit den Endgeräten des Netzes keinen Informationsaustausch vornehmen. Dies gilt insbesondere auch für solche Endgeräte, die an sich für die Benutzung im Netz ausgelegt sind, die sich jedoch außerhalb des Versorgungsbereiches oder in Versorgungslücken des Netzes befinden. Damit können solche Endgeräte auch nicht die vom jeweiligen Funknetz angebotenen Dienste wie Überleitungseinrichtungen, Kommandostrukturen und dergleichen benutzen.

Es ist daher Aufgabe der Erfindung, ein Funknetz aufzuzeigen, in dem auch Endgeräte, die sich außerhalb des Versorgungsbereiches befinden, mit den innerhalb des Versorgungsbereiches des Funknetzes synchron betriebenen Endgeräten kommunizieren können.

Diese Aufgabe wird ausgehend von einem Funknetz laut Oberbegriff des Hauptanspruches durch dessen kennzeichnende Merkmale gelöst. Vorteilhafte Weiterbildungen ergeben sich aus den Unteransprüchen.

Bei einem erfindungsgemäßen Funknetz ist es möglich, ein Endgerät, das sich zwar außerhalb des Versorgungsbereiches des Funknetzes befindet, jedoch noch innerhalb des Sendebereiches eines beispielsweise am Rand des Versorgungsbereiches betriebenen synchronisierten Endgerätes liegt, über die durch dieses Endgerät ausgestrahlte Synchronisationsinformation zu synchronisieren, so daß es mit dem innerhalb des Versorgungsbereichs synchron betriebenen Endgerät kommunizieren und über dieses damit auch mit anderen Endgeräten des Netzes in Verbindung treten kann. Bei einem erfindungsgemäßen Funknetz ist es damit möglich, die Funktionalität des Funknetzes im vollen oder verminderten Umfang auch für solche Endgeräte benutzbar zu machen, die sich außerhalb des Versorgungsbereiches des Netzes befinden und die notwendige technische Funktionalität zur Benutzung des Netzes besitzen und sich auf die ausgesendeten Informationen eines auf das Netz synchronisierten Endgerätes synchronisieren können.

Das die Synchronisationsinformationen aussendende Endgerät im Netz behält selbst seine Synchronisation mit dem Netz bei, indem es entweder kontinuierlich oder in ausreichend kurzen Zeitintervallen die von seiner zugehörigen Basisstation ausgesendeten Synchronisationsinformationen des Netzes auswertet.

Wenn das außerhalb des Versorgungsbereiches betreibbare Endgerät nach Anspruch 1, Merkmal b) neben der Zusatzeinrichtung zum Empfangen und Auswerten der Synchronsationsinformation seinerseits die zusätzliche technische Funktionalität für den Betrieb im Funknetz und zur Benutzung der dort angebotenen Dienste wie Überleitungseinrichtungen, Kommandostrukturen und dergleichen aufweist, ist es möglich, ein solches Endgerät nicht nur außerhalb des Versorgungsbereiches zu betreiben und über das Endgerät nach Anspruch 1, Merkmal a) die Dienste des Funknetzes auch außerhalb des Versorgungsbereiches zu benutzen, sondern es ist beispielsweise auch möglich, ein solches Endgerät unmittelbar im Versorgungsbereich des Funknetzes selbst zu betreiben.

Eine weitere Möglichkeit nach Anspruch 4 bis 6 besteht darin, daß entsprechend ausgestattete Endgeräte auch ohne Benutzung des Funknetzes entweder innerhalb oder außerhalb des Versorgungsbereiches mit anderen entsprechend ausgestatteten Endgeräten in Kontakt treten können. Dabei ist es von besonderem Vorteil, auch ein solches Endgerät wieder mit den für die Benutzung des Netzes erforderlichen Einrichtungen auszustatten, da dann die Möglichkeit gegeben ist, auch mit diesen Endgeräten ohne Einbeziehung des Funknetzes mit solchen Endgeräten in Kontakt zu treten, die solche für die Netzbenutzung erforderlichen Zusatzeinrichtungen nicht aufweisen aber hierdurch in der Lage sind, das Funknetz mit seinen Diensten zu benutzen.

Auf diese Weise ist ein universeller Betrieb eines solchen Funknetzes möglich, ein Endgerät mit den Merkmalen nach Anspruch 1 und 4 hat beispielsweise die Möglichkeit, mit Endgeräten nach Anspruch 4 ohne Einbeziehung des Funknetzes zu kommunizieren ohne hierbei selbst die Synchronisierung mit dem Funknetz zu verlieren. Bei einem solchen Betrieb werden alle beteiligten Endgeräte auf die von dem Endgerät nach Merkmal a) von Anspruch 1 bereitgestellten Synchronisationsinformationen synchronisiert und nur das diese Synchronisationsinformationen aussendende Endgerät selbst ist weiterhin auf die von seiner zugehörigen Basisstation ausgesendete Synchronisationsinformation synchronisiert. Es wird damit eine begrenzte Vergrößerung des Versorgungsbereiches erzielt.

Wenn ein Endgerät die Funktionalität nach den Ansprüchen 1 und 4 umfaßt ist es beispielsweise auch in der Lage, bei teilweisem oder kompletten Ausfall des Funknetzes mit Endgeräten nach Anspruch 4 in Kontakt zu treten bzw. in Kontakt zu bleiben und bei Rückkehr der Funktionalität des Netzes kann dieses Endgerät dann automatisch wieder zum synchronen Betrieb im Netz übergehen.

Die erfindungsgemäßen Zusatzeinrichtungen zur Erweiterung der technischen Funktionalitäten eines Endgerätes können in jedem Endgerät entweder einzeln oder gemeinsam vorhanden sein und dabei unabhängig voneinander aktiviert und deaktiviert werden, damit ist ein sehr universeller Wenn Endgeräte den Versorgungsbereich V verlassen, wie dies durch die Endgeräte E4 bis E6 dargestellt ist, sind sie nicht mehr im Sendebereich der Basisstationen und können daher auch nicht mehr synchronisiert werden, sie können damit auch nicht mehr mit anderen noch im Versorgungsbereich liegenden Endgeräten E1 bis E3 Informationen austauschen.

Um dies trotzdem zu ermöglichen ist gemäß der Erfindung mindestens eines der Endgeräte, beispielsweise das Endgerät E1, mit einer Einrichtung zum Aussenden von Synchronisationsinformationen ausgestattet, die es von den Synchronisationsinformationen ableitet, die es von seiner zugehörigen Basisstation, beispielsweise B1, des Funknetzes jeweils empfängt. Dieses Endgerät E1, das diese Synchronisationsinformationen vorzugsweise mit erhöhter Leistung aussendet, kann, wenn es beispielsweise am Rand des Versorgungsbereiches V betrieben wird, mit einem außerhalb des Versorgungsbereichs V liegenden Endgerätes, beispielsweise E6, in Kontakt treten. Wenn dieses Endgerät E6 mit einer entsprechenden Zusatzeinrichtung zum Empfang der Synchronisationsinformationen des Endgerätes E1 ausgestattet ist kann auch dieses Endgerät E6 mit dem Endgerät E1 synchronisiert werden, und es ist auch zwischen diesen beiden Endgeräten ein Informationsaustausch möglich. Über das Endgerät E1 und dessen Basisstation kann das Endgerät E6 auch mit anderen im Netz synchron betriebenen Endgeräten, z.B. E2 oder E3 Informationen austauschen.

Gemäß einer Weiterbildung der Erfindung können einige Endgeräte, beispielsweise E4 bis E6, zusätzliche Einrichtungen aufweisen, mit denen sie innerhalb oder außerhalb des Versorgungsbereiches gegenseitig einen Informationsaustausch durchführen können. Darüber hinaus können einige Endgeräte, beispielsweise E5, Zusatzeinrichtungen beinhalten, die eine Erhöhung der Reichweite eines Endgerätes ermöglichen, welches ohne Benutzung des Funknetzes mit gleichartigen Endgeräten verbindbar ist. Dazu sind diese Geräte über Synchronisationsinformationen synchronisiert, die denjenigen des Netzes nicht widersprechen. Auf diese Weise können z.B. die beiden Endgeräte E4 und E5 auch ohne Benutzung des Netzes entweder innerhalb oder außerhalb des Versorgungsbereiches V miteinander in Kontakt treten, oder E4 kann mit E6 über E5 Informationen austauschen.

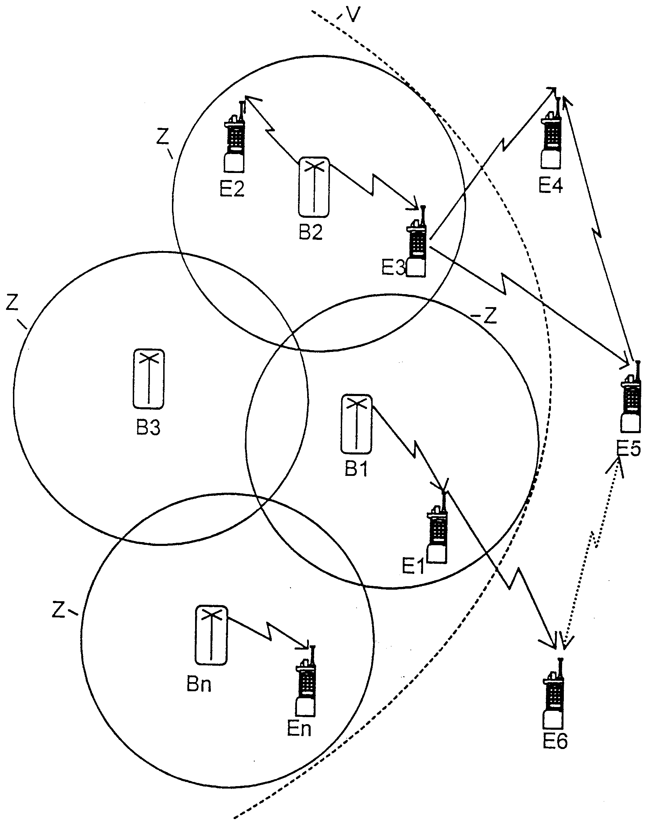

## Patentansprüche

1. Funknetz mit mehreren einen räumlich begrenzten Versorgungsbereich abdeckenden Basisstationen, über welche innerhalb des Versorgungsbereiches mobile und/oder stationäre Endgeräte, die durch von den Basisstationen ausgesendete Synchronisationsinformationen synchronisiert sind, zur Informationsübertragung verbindbar sind, dadurch **gekennzeichnet,** daß
a) mindestens ein Endgerät (E1 bis E3) eine Zusatzeinrichtung zum Aussenden von Synchronisationsinformationen aufweist, die von den von mindestens einer der Basisstationen (B1 bis Bn) des Netzes ausgesendeten Synchronisationsinformationen abgeleitet werden, und
b) mindestens ein auch außerhalb des Versorgungsbereiches (V) des Netzes betreibbares Endgerät (E4 bis E6) vorgesehen ist, das seinerseits eine Zusatzeinrichtung zum Empfangen und Auswerten dieser durch ein Endgerät (E1 bis E3) des Netzes ausgesendeten Synchronisationsinformationen aufweist.

2. Funknetz nach Anspruch 1, dadurch **gekennzeichnet,** daß das die zusätzlichen Synchronisationsinformationen aussendende Endgerät (E1 bis E3) während dieser Aussendung sowie seiner Verbindung mit dem außerhalb des Versorgungsbereiches (V) betriebenen Endgerät (E4 bis E6) weiterhin die von mindestens einer der Basisstationen (B1 bis Bn) des Netzes ausgesendeten Synchronisationsinformationen auswertet.

3. Funknetz nach Anspruch 1 oder 2, dadurch **gekennzeichnet,** daß das außerhalb des Versorgungsbereiches (V) betreibbare Endgerät (E4 bis E6) zusätzlich die für die synchrone Benutzung des Funknetzes erforderlichen Einrichtungen aufweist.

4. Funknetz nach einem oder mehreren der vorhergehenden Ansprüche, dadurch **gekennzeichnet,** daß mindestens eines der Endgeräte (E1 bis E3) des Funknetzes und/oder mindestens eines der außerhalb des Funknetzes betreibbaren Endgeräte (E4 bis E6) eine Zusatzeinrichtung aufweist, mit welcher es innerhalb oder außerhalb des Versorgungsbereiches (V) zur Informationsübertragung mit einem anderen gleichartigen Endgerät verbindbar ist.

5. Funknetz nach Anspruch 4, dadurch **gekennzeichnet,** daß mindestens eines dieser Endgeräte eine Zusatzeinrichtung aufweist, mit welcher andere dieser Endgeräte zur Informationsübertragung hierüber verbindbar sind.

6. Funknetz nach Anspruch 4 oder 5, dadurch **gekennzeichnet,** daß die zur Synchronisation dieser Endgeräte erforderlichen Synchronisationsinformationen so gewählt sind, daß sie denjenigen des Funknetzes nicht widersprechen.

7. Funknetz nach einem oder mehreren der vorhergehen den Ansprüche, dadurch **gekennzeichnet,** daß die in den inner- oder außerhalb des Versorgungsbereiches (V) betreibbaren Endgeräte vorgesehenen Zusatzeinrichtungen unabhängig voneinander betreibbar sind.
